# EUROPEAN PATENT SPECIFICATION

(11) **EP 1 957 292 B1**
(45) Date of publication and mention of the grant of the patent: **30.09.2009**
(21) Application number: 06820370.2
(22) Date of filing: 30.11.2006
(51) Int. Cl.: B60B 7/08, B60B 7/12

(54) **ALLOY WHEEL PROTECTORS**
LEGIERUNGSRADSCHUTZVORRICHTUNGEN
DISPOSITIF DE PROTECTION DE ROUE EN ALLIAGE

(30) Priority: 06.12.2005 GB 0524834; 22.04.2006 GB 0607999; 15.06.2006 GB 0611835; 08.08.2006 GB 0615697
(43) Date of publication of application: 20.08.2008
(73) Proprietor: Fynn, Leo Nithas, Torquay Devon TQ2 7SG (GB)
(72) Inventor: Fynn, Leo Nithas, Torquay Devon TQ2 7SG (GB)
(74) Representative: Craske, Stephen Allan
(86) International application number: PCT/GB2006/004465
(87) International publication number: WO 2007/066077

(56) References cited:
- DE-A1- 1 948 955
- GB-A- 1 186 316
- US-A1- 2005 012 383

## Description

### TECHNICAL FIELD OF THE INVENTION

This invention relates to wheel protectors for use in shielding the alloy wheels of a vehicle against damage, according to the preamble of claim 1.

### BACKGROUND

Many motor vehicles are fitted with alloy wheels. These have many attractions to vehicle owners. Apart from the fact that they have a "sporty" appearance, they are also lightweight and corrosion resistant. However, they can suffer badly from chips scuffs and scratches due to kerb damage or contact with another vehicle wheel, a piece of flint or other hard object.

US 2005/001383 A1 discloses a wheel protector which includes a substantially circular cover having a plurality of attachment elements engaged with the cover at circumferentially-spaced positions for attaching the cover to a wheel.

The present invention seeks to provide a new and inventive form of wheel protector which is very effective yet is easily fitted to a range of wheels whilst being easy to remove or replace when required.

### SUMMARY OF THE INVENTION

The present invention proposes an alloy wheel protector which includes a substantially disc shaped cover having a plurality of attachment elements engaged with the cover at circumferentially-spaced positions for attaching the cover to an alloy wheel,
*characterised in that* the cover has a circular circumferentially-extending track and the attachment elements are slidably engaged with the track such that the attachment elements can be moved along the track to different circumferential positions.

The attachment elements may be attached to the spokes of an alloy wheel using elongate tie elements or they may be attached to the wheel by means of adjustable locking fingers which engage behind the spokes.

### BRIEF DESCRIPTION OF THE DRAWINGS

The following description and the accompanying drawings referred to therein are included by way of non-limiting example in order to illustrate how the invention may be put into practice. In the drawings:
Figure 1 shows an alloy wheel protector in accordance with the invention, as viewed from the inside (wheel side);
Figure 2 is a radial section through an outer portion of the wheel protector;
Figure 3 shows a cable tie for use in attaching the wheel protector to an alloy wheel;
Figure 4 shows an alloy wheel to which the wheel protector has been fitted, viewed from the outside;
Figure 6 is an enlarged detail of two attachment elements as used in the modified wheel protector;
Figure 7 shows an alloy wheel to which another form of the wheel protector has been fitted, as viewed from the outside;
Figure 8 is an enlarged general view of one of the attachment elements of Fig. 8;
Figure 9 is a sectional view showing the same attachment element engaged with a wheel cover; and
Figure 10 is an exploded view of the wheel protector of Fig. 8 showing the wheel cover, attachment elements and ties.

### DETAILED DESCRIPTION OF THE DRAWINGS

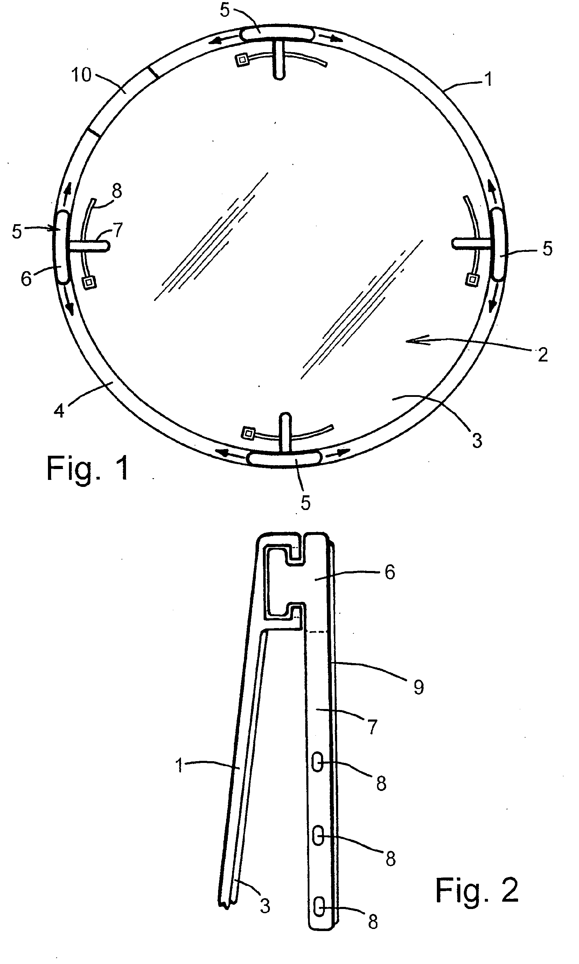

Referring to **Fig. 1****,** the alloy wheel protector includes a disc-shaped cover 1 which is typically moulded of a tough thermoplastic. The cover is preferably transparent so that a wheel to which it is to be affixed will be visible through the cover, although opaque or coloured material could be used. The cover could also be provided with a decorative embellishment if desired. The diameter of the cover 1 is sufficient to cover the outer tyre rim of an alloy wheel without covering the tyre itself, but the wheel protectors can be manufactured in different diameters for use with different sizes of wheel. Although the cover is formed of a tough material the rear face 2 is coated with a cushioning layer 3 of resilient material such as natural rubber or, preferably, a synthetic rubber such as silicone. If the cover is transparent the cushioning layer 3 would also be transparent. The rear face 2 is formed with a peripheral circumferentially extending moulded circular track 4 with which a number of attachment elements in the form of T-bars 5 are slidably engaged in any suitable manner.

The T-bars 5 may be formed of similar thermoplastic to the cover 1 and are preferably also transparent. Referring now to **Fig. 2** in conjunction with **Fig. 1****,** each T-bar has an arcuate head 6 and a stem 7 containing one or more transverse fixing holes 8 extending generally parallel to the head 5. The inner face of each T-bar is preferably also coated with a cushioning elastomeric layer 9, especially the head 6 which may contact the rim of the wheel. The radius of curvature of the head 6 matches that of the track 4, and the head is profiled for captive sliding engagement with the track.

Four such T-bars are shown in **Fig. 1****,** but the number of T-bars may vary according to the number of spokes of the alloy wheel to which the protector is to be attached. In order to make it easy to change the number of T-bars one or more sections 10 of the track 4 may be profiled to allow easy snap-fitting engagement with the track 4. Once engaged, the T-bars can be slidably adjusted to the required circumferential positions.

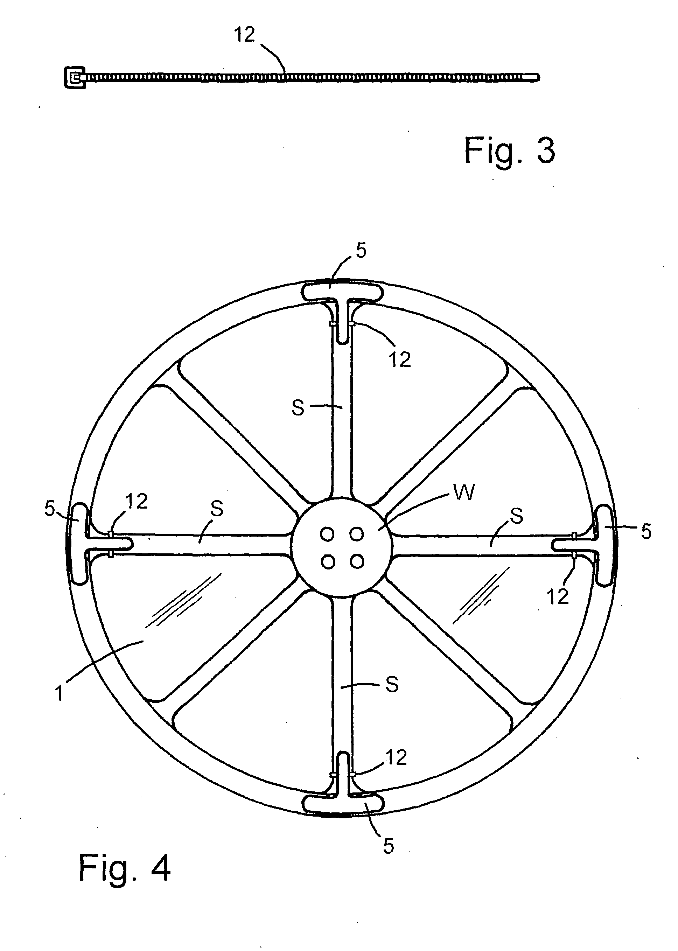

The wheel protector is secured to the wheel using ratchet cable ties 12 of well-known form, again preferably transparent, one of which is shown in **Fig. 3****.**

**Fig. 4****,** shows the wheel protector secured to an eight-spoke alloy wheel W. To fit the wheel protector the T-bars are slid to the required circumferential positions (in this case at 90° intervals). A cable tie 10 is then inserted through the fixing hole 8 of each T-bar and tightened around a spoke S. The cable ties can then be trimmed to length if necessary.

The cable ties hold the wheel protector sufficiently firmly to prevent significant movement during normal use. However, should the wheel come into contact with a kerb or another hard object the cover will absorb the impact and protect the alloy wheel from damage. The resilient cushioning layer protects the alloy surface and reduces the risk of abrasion damage should any movement take place between the wheel protector and the alloy wheel during impact.

The wheel protectors are easily removed when required, for example when selling a vehicle or to replace a damaged protector. The cable ties 12 are simply cut using a sharp knife or wire cutters.

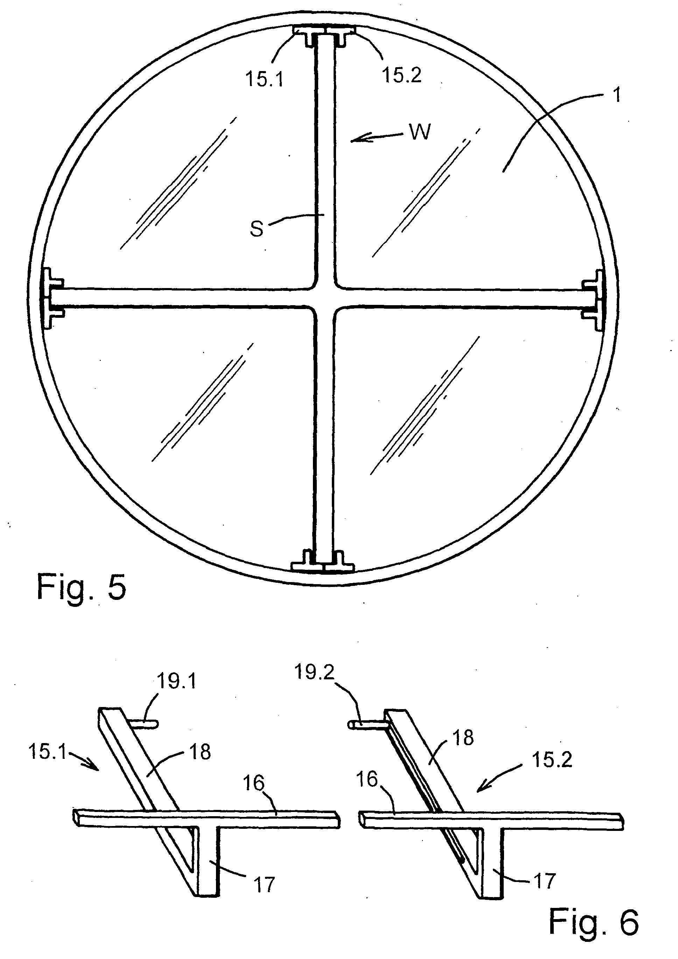

**Fig. 5** shows a modified alloy wheel protector fitted to a four-spoke alloy wheel *W.* The wheel protector uses the same disc-shaped cover 1 as described above, but four pairs of slidable attachment elements 15.1 and 15.2 are engaged with the circumferential track 4, one pair for each spoke of the wheel. The attachment elements may be formed of metal or similar thermoplastic to the cover 1, preferably transparent. Referring to **Fig. 6****,** each attachment element has a head 16 profiled for captive sliding engagement with the track 4, with a radially projecting stem 17 which carries a perpendicular locating arm 18. The locking arms both carry locking fingers 19.1 and 19.2 which project towards each other, as shown. The locking fingers can be adjusted along the locating arms 18, e.g. by reception in grooves which preferably have internal ratchet formations which allow the fingers to move easily towards the heads 16 but which resist movement in the opposite direction. Other means of adjusting the fingers are possible. For example, the fingers could be slid over the arms 18 and fixed to the arms by grub screws. In another proposed embodiment the fingers could move along an internal screw mounted within the arms 18 and which is turned using an Allen key, screwdriver or other tool.

The attachment elements may be coated with a cushioning elastomeric layer, especially the surfaces which make contact the rim of the wheel.

Each pair of attachment elements 15.1 and 15.2 is slidably adjusted to the required circumferential positions until the locating arms 18 make contact with opposite sides of a respective spoke S, as in **Fig. 5****.** The fingers 19.1 and 19.2 are then moved along the respective locating arms towards the heads 16 to pull the wheel protector tightly against the rim of the wheel W. The fingers may be formed to engage behind the spokes of the wheel and prevent circumferential movement of the attachment elements around the track 4. Such movement may also be resisted by providing interengaging teeth on the track and the head 16 which increase their engagement as the fingers are tightened onto the spokes.

The attachment elements thus hold the wheel protector firmly to the wheel and prevent movement during normal use. Should the wheel come into contact with a kerb or another hard object the cover will absorb the impact and protect the alloy wheel from damage. The attachment elements may increase the protection of the wheel by further reducing the risk of rotational movement between the wheel and the cover.

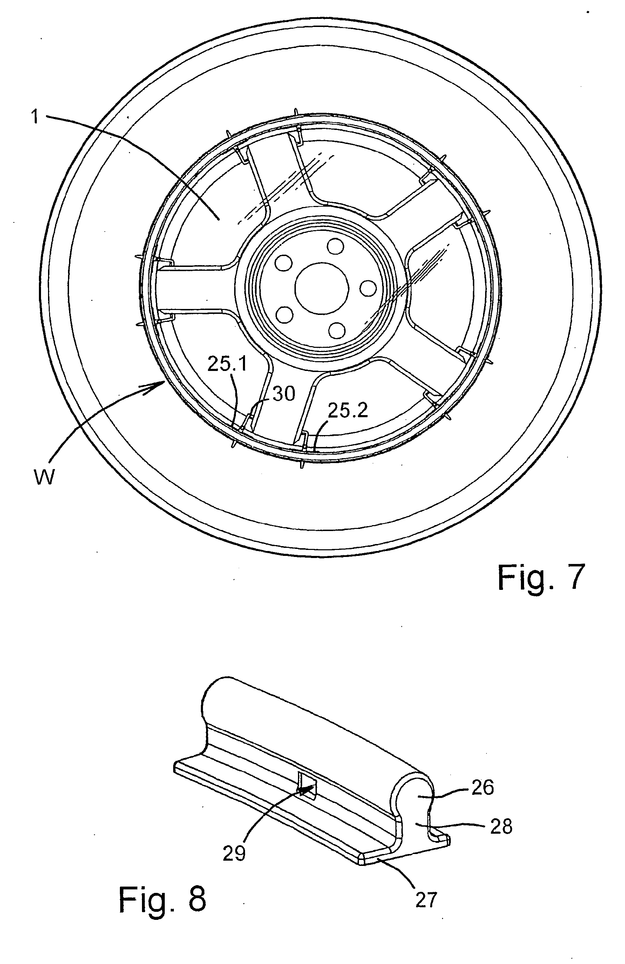

**Fig**. **7** shows another form of the wheel protector. In this example the wheel protector is fitted to a five-spoke alloy wheel W. The wheel protector again comprises a disc-shaped cover 1, which may be as described above, but five pairs of attachment elements 25.1 and 25.2 are slidably engaged with the circumferential track 4. Again, the number and circumferential positions of the attachment elements can be varied to suit the configuration of the wheel *W.* The attachment elements may be formed of metal or similar thermoplastic to the cover 1, and are preferably transparent. Referring to **Fig. 8****,** each attachment element is of elongate shape and, as seen in end view, includes a part-circular head 26, profiled for captive sliding engagement with the track 4, which is joined to a flat base portion 27 by a neck portion 28 containing a fixing hole 29.

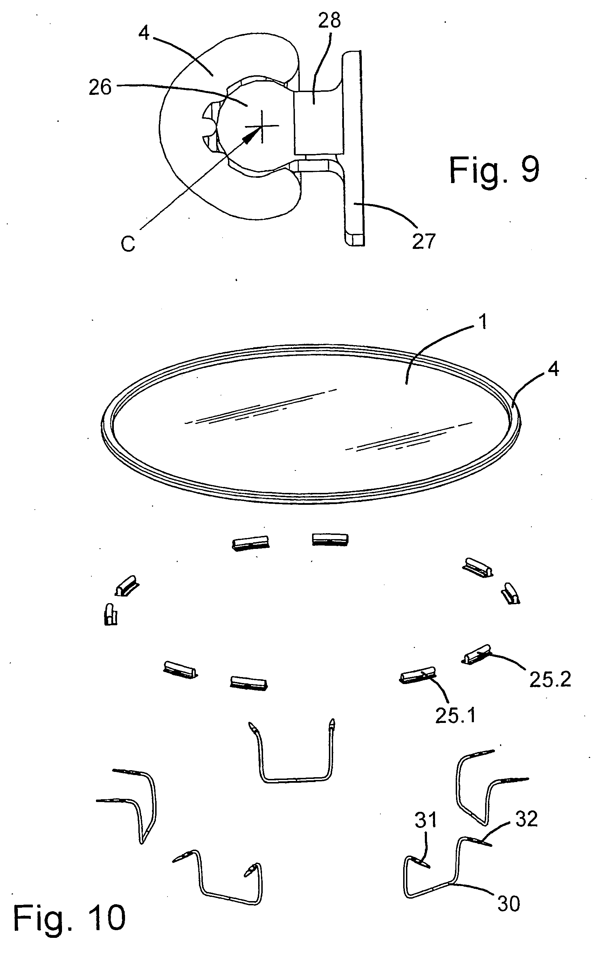

As shown in **Fig. 9****,** the head 26 is snap-engaged in the C-shaped track 4 of the wheel cover 1 and, when engaged, is capable of limited angular rotational movement within the track 4 about axis C.

The wheel protector may be secured to the wheel using one of two methods. In one method flexible ties 30 may be engaged with each pair of elements 25.1 and 25.2, as shown in **Fig.s 7** **and** **10****.** The ties are preferably formed of thermoplastic to avoid damaging the alloy wheel, and are formed such that the opposite ends 31 and 32 can be non-releasably engaged with the respective elements 25.1 and 25.2. For this purpose, the holes 28 preferably contain ratchet formations which engage ribbed ends of the ties in the manner of the cable ties referred to above. The cable ties can then be trimmed to length if necessary. Alternatively, the ties could be formed of other materials, e.g. springy wire clips which can be inserted into the holes 28 to engage around the spokes of the wheel.

In a second method of attachment the flat base portions 27 can be bonded directly to the rim of an alloy wheel using an acrylic foam self-adhesive tape. The angular movement of the attachment elements referred to above allows the base portions to lie parallel to the adjacent surface of the wheel rim and thus ensures that a good bond is achieved. This method of semi-permanent attachment may, for example, be used with new vehicles when the wheels are clean and undamaged

Whichever attachment means are used the wheel protector is held sufficiently firmly to prevent significant movement during normal use. However, should the wheel come into contact with a kerb or another hard object the cover absorbs the impact and protects the alloy wheel from damage. The resilient cushioning layer protects the alloy surface and reduces the risk of abrasion damage should any movement take place between the wheel protector and the alloy wheel during impact.

The wheel protectors can be temporarily removed by disengaging the attachment elements from the track or by cutting the ties.

## Claims

1. An alloy wheel protector which includes a substantially disc shaped cover (1) having a plurality of attachment elements (5; 15; 25) engaged with the cover at circumferentially-spaced positions for attaching the cover to an alloy wheel,
***characterised in that*** the cover has a circular circumferentially-extending track (4) and the attachment elements (5; 15; 25) are slidably engaged with the track (4) such that the attachment elements can be moved along the track to different circumferential positions.

2. An alloy wheel protector according to Claim 1 in which the attachment elements (5; 15; 25) can be releasably engaged with and disengaged from the track (4) to change the number of attachment elements.

3. An alloy wheel protector according to Claim 1 or 2 in which each attachment element (5; 25) has at least one hole (8; 29) having an elongate tie element (12; 30) inserted through the hole to attach the cover to the spoke of an alloy wheel.

4. An alloy wheel protector according to Claim 3 in which opposite ends of the elongate tie element (30) are engaged with two such attachment elements (25.1 and 25.2).

5. An alloy wheel protector according to Claim 4 in which the elongate tie element (30) is engaged with each attachment element (25.1, 25.2) by means of a ratchet arrangement.

6. An alloy wheel protector according to Claim 1 or 2 in which each attachment element (15) has a locking finger (19) which engages behind the spoke of an alloy wheel.

7. An alloy wheel protector according to Claim 1 or 2 in which the attachment elements (25) are provided with a self-adhesive material for bonding the attachment elements to the rim of an alloy wheel.

## Patentansprüche

1. Leichtmetallrad-Schutz mit einer im Wesentlichen scheibenförmigen Abdeckung (1) mit einer Mehrzahl von Befestigungselementen (5; 15; 25), die an in Umfangsrichtung auf Abstand zueinander liegenden Positionen an der Abdeckung angreifen, um die Abdeckung an einem Leichtmetallrad anzubringen,
**dadurch gekennzeichnet, dass** die Abdeckung eine kreisförmige, in Umfangsrichtung verlaufende Bahn (4) hat und dass die Befestigungselemente (5; 15; 25) gleitfähig mit der Bahn (4) eingreifen, so dass die Befestigungselemente entlang der Bahn zu verschiedenen Positionen in Umfangsrichtung bewegt werden können.

2. Leichtmetallrad-Schutz nach Anspruch 1, bei dem die Befestigungselemente (5; 15; 25) lösbar in Eingriff mit der Bahn und außer Eingriff mit der Bahn (4) bringbar sind, um die Anzahl von Befestigungselementen zu verändern.

3. Leichtmetallrad-Schutz nach Anspruch 1 oder 2, bei dem jedes Befestigungselement (5; 25) wenigstens ein Loch (8; 29) hat, wobei ein längliches Ankerelement (12; 30) durch das Loch eingeführt ist, um die Abdeckung an der Speiche eines Leichtmetallrades zu befestigen.

4. Leichtmetallrad-Schutz nach Anspruch 3, bei dem gegenüberliegende Enden des länglichen Ankerelements (30) mit zwei solchen Befestigungselementen (25.1) und (25.2) eingreifen.

5. Leichtmetallrad-Schutz nach Anspruch 4, bei dem das längliche Ankerelement (30) mit jedem Befestigungselement (25.1, 25.2) mittels einer Sperrvorrichtung in Eingriff steht.

6. Leichtmetallrad-Schutz nach Anspruch 1 oder 2, bei dem jedes Befestigungselement (15) einen Blockierfinger (19) hat, der hinter der Speiche eines Leichtmetallrades angreift.

7. Leichtmetallrad-Schutz nach Anspruch 1 oder 2, bei dem die Befestigungselemente (25) mit einem selbstklebenden Material zum Befestigen der Befestigungselemente an dem Rand des Leichtmetallrades versehen sind.

## Revendications

1. Dispositif de protection de roue en alliage qui comprend une enveloppe sensiblement en forme de disque (1) ayant une pluralité d'éléments de fixation (5 ; 15 ; 25) engagés avec l'enveloppe à des positions espacées circonférentiellement pour fixer l'enveloppe à une roue en alliage,
***caractérisé par le fait que*** l'enveloppe a une piste circulaire s'étendant circonférentiellement (4) et les éléments de fixation (5 ; 15 ; 25) sont engagés de façon coulissante avec la piste (4) de telle sorte que les éléments de fixation peuvent être amenés à se déplacer le long de la piste à différents positions circonférentielles.

2. Dispositif de protection de roue en alliage selon la revendication 1, dans lequel les éléments de fixation (5 ; 15 ; 25) peuvent être engagés de façon libérable avec et désengagés de la piste (4) pour changer le nombre d'éléments de fixation.

3. Dispositif de protection de roue en alliage selon la revendication 1 ou 2, dans lequel chaque élément de fixation (5 ; 25) a au moins un trou (8 ; 29) ayant un élément d'attache allongé (12 ; 30) introduit à travers le trou pour fixer l'enveloppe au rayon d'une roue en alliage.

4. Dispositif de protection de roue en alliage selon la revendication 3, dans lequel les extrémités opposées de l'élément d'attache allongé (30) sont engagées avec deux tels éléments de fixation (25.1 et 25.2).

5. Dispositif de protection de roue en alliage selon la revendication 4, dans lequel l'élément d'attache allongé (30) est engagé avec chaque élément de fixation (25.1, 25.2) au moyen d'un mécanisme à cliquet.

6. Dispositif de protection de roue en alliage selon la revendication 1 ou 2, dans lequel chaque élément de fixation (15) a un doigt de verrouillage (19) qui s'engage derrière le rayon d'une roue en alliage.

7. Dispositif de protection de roue en alliage selon la revendication 1 ou 2, dans lequel les éléments de fixations (25) comportent un matériau auto-adhésif pour coller les éléments de fixation à la jante d'une roue en alliage.
